# FASCICULE DE BREVET EUROPEEN

(11) **EP 1 455 991 B1**
(45) Date de publication et mention de la délivrance du brevet: **08.06.2005**
(21) Numéro de dépôt: 02805382.5
(22) Date de dépôt: 13.12.2002
(51) Int. Cl.: B25J 15/04, B25J 19/00

(54) **CHANGEUR D'OUTIL**
WERKZEUGWECHSELVORRICHTUNG
TOOL CHANGER

(30) Priorité: 21.12.2001 FR 0116784
(43) Date de publication de la demande: 15.09.2004
(73) Titulaire: ABB MC, 95310 Saint Ouen l'Aumône (FR)
(72) Inventeur: DEMIT, Daniel, F-92400 Courbevoie (FR); MALATIER, François, F-95150 Taverny (FR); GUILLOMET, Patrick, F-92190 Meudon (FR)
(74) Mandataire: Lavialle, Bruno
(86) Numéro de dépôt international: PCT/FR2002/004341
(87) Numéro de publication internationale: WO 2003/053640

(56) Documents cités:
- EP-A- 0 525 699
- FR-A- 2 601 614

## Description

La présente invention concerne un changeur d'outil destiné à équiper un robot et des outils afin d'assurer l'interchangeabilité de ces derniers sur le robot. Ces outils peuvent être par exemple des armatures de maintien de pièces, des mains de préhension, des organes de soudage ou des buses de projection de peinture...

Un changeur d'outil comporte généralement une partie robot pourvue de moyens de sa fixation à un poignet de robot, des parties outil pourvues chacune de moyens de fixation à un outil, des moyens d'accouplement et de désaccouplement de la partie robot et d'une des parties outils, et des moyens de positionnement relatif de la partie outil et de la partie robot. Toutes les parties outil comportent, d'une part, des moyens identiques pour coopérer avec la partie robot et les moyens d'accouplement et de désaccouplement et, d'autre part, des moyens spécifiques permettant leur adaptation sur les outils qu'elles sont destinées à équiper. Les outils peuvent dès lors tous être montés sur la partie robot et sont donc interchangeables.

Par ailleurs, les outils doivent être raccordés à une source d'alimentation en énergie. Pour se faire, la partie outil et la partie robot sont pourvues de circuits de commande et le changeur d'outil comprend des moyens de raccordement de ces circuits. Les circuits et les moyens de raccordement sont par exemple agencés pour permettre le transport de l'électricité et/ou d'un fluide tel que l'air comprimé, ou pour assurer une transmission optique. Les moyens de raccordement comportent des connecteurs homologues qui sont solidaires, pour les uns, de la partie robot et, pour les autres, de la partie outil du changeur et qui sont reliés au circuit de transport d'énergie associé à la partie du changeur sur laquelle ils sont montés.

Lorsque les parties robot et outil sont approchés l'une de l'autre pour être accouplées, les connecteurs homologues sont amenés en contact et réalisent le raccordement. Les parties outil et robot doivent être positionnées de telle manière que les connecteurs soient alignés précisément l'un par rapport à l'autre sans quoi ils ne peuvent être connectés correctement ou ils subissent des contraintes qui risquent de les détériorer.

L'accouplement des deux parties du changeur nécessite donc que le robot assure un positionnement relatif précis de la partie robot et de la partie outil pour permettre la coopération des moyens de positionnement et l'engagement des connecteurs.

Par ailleurs, dans certaines applications, l'outil est une armature de maintien d'une pièce qui est destinée à être bridée sur un bâti ou sur une armature de maintien d'une autre pièce de manière à permettre l'assemblage de ces deux pièces. Il arrive alors qu'en raison des tolérances de positionnement du robot ou d'une dérive thermique de celui-ci, la position de bridage de l'outil soit légèrement différente de la position dans laquelle le robot a amené ledit outil. Il en résulte que, lors du bridage, des contraintes sont exercées tant sur l'outil que sur le robot. De telles contraintes sont néfastes à un assemblage correct des deux pièces et peuvent en outre provoquer un désengagement partiel des connecteurs occasionnant un mauvais contact électrique ou des tuiles.

Pour obvier à ces inconvénients, il est connu d'intercaler entre le changeur et l'outil ou entre le changeur et le robot, un organe dit de compliance destiné à introduire une certaine liberté de mouvements relatifs entre les deux éléments qu'il relie. Toutefois, cette solution présente plusieurs inconvénients. Tout d'abord, l'organe de compliance augmente la distance entre le poignet du robot et l'outil qu'il supporte, ce qui a pour conséquence d'éloigner le centre de gravité de l'outil par rapport au poignet du robot, augmentant l'inertie de l'outil et limitant la masse maximale que peut emporter le robot. De plus, l'élément compliant a lui-même une masse qui doit être déduite de la masse maximale que peut emporter le robot. Avec un tel système, seuls des outils relativement légers peuvent être utilisés. L'organe de compliance comportant un actionneur de verrouillage, il est nécessaire de l'alimenter en énergie. Le circuit d'alimentation des actionneurs est alors relativement complexe et la fiabilité du dispositif est diminuée.

Le document FR 2601614 A présente un dispositif de changement d'outil pour robot comportant une partie robot et une partie outil, reliées par des moyens de raccordement comprenant des barrettes de connexion électrique. Les barrettes du côté robot sont montées de façon à ce que de légères rotations d'ajustement soient possibles lors de l'accouplement des parties robot et outil. Toutefois, en cas d'erreur de positionnement relativement importante, comme par exemple un décalage entre l'axe du poignet du robot et l'axe de l'outil, ces moyens d'ajustement en rotation ne sont pas suffisants.

Selon l'invention, on prévoit, un changeur d'outil comportant une partie robot et une partie outil pourvues de moyens de fixation respectivement à un poignet de robot et à un outil, des moyens d'accouplement et de désaccouplement de la partie outil et de la partie robot, et des moyens de raccordement d'un circuit de transport d'énergie de la partie outil à un circuit de transport d'énergie de la partie robot, ces moyens de raccordement comportant au moins des premier et deuxième connecteurs homologues chacun monté sur une des parties du changeur et relié au circuit de transport d'énergie de ladite partie, le premier connecteur étant solidaire d'un support relié à la partie correspondante du changeur par des moyens de liaison ayant un état de solidarisation indexée du support par rapport à ladite partie correspondante et un état de désolidarisation du support par rapport à celle-ci.

Ainsi, les moyens de liaison relient le support à la partie robot ou à la partie outil (les deux montages sont possibles) de telle manière que la désolidarisation libère le support et la partie du changeur sur laquelle le support est monté de sorte que des mouvements relatifs sont possibles entre le support et cette partie du changeur alors que la solidarisation indexée permet d'avoir un positionnement précis du support par rapport à cette partie du changeur. Le connecteur et la partie du changeur qui le porte peuvent être désolidarisés lorsque les deux parties du changeur vont être accouplées ou lorsque l'outil va être bridé sur un autre outil ou sur un bâti. Il ne s'exerce alors aucune contrainte sur le connecteur lors du bridage et/ou lors de l'accouplement. En outre, lorsque l'outil est bridé sur un autre outil ou sur le bâti, il est possible de désaccoupler la partie outil de la partie robot tout en maintenant les connecteurs engagés. Ceci permet de libérer les contraintes liées à un double positionnement de l'outil par le robot et par l'autre outil ou le bâti.

De préférence, le changeur comporte un moyen d'amenée des moyens de liaison dans leur état de désolidarisation, le moyen d'amenée étant agencé pour coopérer avec l'autre partie du changeur lorsque les parties du changeur sont rapprochées l'une de l'autre.

Les moyens de liaison sont alors automatiquement amenés dans l'état de désolidarisation lorsque les parties du changeur sont engagées l'une avec l'autre pour être accouplées.

Selon un mode de réalisation particulier des moyens de liaisons, ces derniers comprennent au moins deux éléments homologues de positionnement solidaires pour l'un de ladite partie correspondante et pour l'autre du support, et le support est monté sur ladite partie correspondante pour être mobile au moins parallèlement à une direction d'accouplement des deux parties du changeur entre une première position dans laquelle les éléments homologues de positionnement sont mutuellement engagés pour assurer la solidarisation indexée et une deuxième position dans laquelle les éléments homologues de positionnement sont dégagés l'un de l'autre et, de préférence, le changeur comprend un moyen pour rappeler élastiquement le support dans sa première position.

Les moyens de liaison ont alors une structure particulièrement simple qui leur permet de manière automatique d'être amenés dans l'état de désolidarisation lorsque les parties du changeur sont approchées l'une de l'autre et de revenir dans l'état de solidarisation dès qu'elles sont éloignées l'une de l'autre.

Avantageusement alors, un des éléments de positionnement est une tige qui est parallèle à la direction d'accouplement et comporte une portion de centrage et de butée axiale et l'autre élément de positionnement est un logement recevant la tige avec un jeu transversal et comportant un siège pour coopérer avec la portion de centrage et de butée axiale, la portion de centrage et de butée axiale étant de préférence agencé pour être réglable en position le long de la tige.

Le réglage en position de la portion de centrage et de butée axiale est utilisable pour fixer la distance qui doit séparer les parties robot et outil pour provoquer la désolidarisation des moyens de liaison.

De préférence, le changeur comprend des moyens de verrouillage des connecteurs en position connectée qui sont agencés pour être actifs au moins lorsque les moyens de liaison sont dans leur état de désolidarisation. Avantageusement, chaque connecteur est solidaire d'une plaque montée sur la partie correspondante et les moyens de verrouillage comprennent un pion fixé sur une des plaques pour s'étendre parallèlement à la direction d'accouplement et pourvu latéralement d'un relief, un logement ménagé dans l'autre des plaques pour recevoir le pion, un élément de retenue axiale monté dans le logement pour être mobile entre une position en saillie dans le logement pour coopérer avec le relief du pion et former une butée à son extraction du logement et une position escamotée pour être dégagé du relief, et un moyen d'actionnement de l'élément de retenue axiale entre ses deux positions.

Ceci limite les risques d'une déconnexion accidentelle et améliore donc la fiabilité de la connexion.

Selon un mode de réalisation particulier des moyens d'accouplement, les moyens d'accouplement et de désaccouplement comprennent un appendice solidaire d'une des parties du changeur et pourvu d'au moins trois doigts radiaux qui ont une extrémité libre conique et qui sont montés pour coulisser entre une position de sortie dans laquelle ils s'étendent radialement en saillie de l'appendice et une position rentrée dans laquelle ils s'étendent en retrait de leur position sortie, un organe d'actionnement des doigts entre leurs deux positions, et un logement ménagé dans l'autre partie du changeur pour recevoir l'appendice avec un jeu transversal, le logement étant délimité par une paroi dans laquelle sont ménagés radialement des renfoncements pour accueillir les extrémités libres des doigts dans leur position sortie, le logement étant agencé de telle manière qu'il existe un jeu transversal entre l'appendice avec les doigts en position rentrée et le logement et entre l'extrémité libre conique des doigts en position rentrée et les renfoncements.

Ceci permet notamment de limiter voir éliminer la nécessité de l'emploi de moyens de positionnement relatifs des parties outil et robot et de pouvoir approcher la partie robot de la partie outil selon une trajectoire de précision relativement faible.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue schématique partielle en coupe d'un changeur d'outil conforme à l'invention,
- la figure 2 est une vue agrandie d'une came d'actionnement des moyens d'accouplement et de désaccouplement de ce changeur d'outil,
- la figure 3 est une vue partielle en coupe longitudinale, plus détaillée que la figure 1, de ce changeur d'outil
- la figure 4 est une vue en coupe des moyens de verrouillage de la connexion,
- la figure 5 est une vue en coupe selon la ligne V-V de la figure 4 des moyens de verrouillage,
- la figure 6 est une vue en coupe des moyens de liaison de la plaque support des connecteurs à la partie correspondante du changeur d'outil, dans l'état de solidarisation de ces moyens de liaison,
- la figure 7 est une vue analogue à la figure 6 des moyens de liaison dans leur état de désolidarisation.

En référence aux figures, le changeur d'outil conforme à l'invention comprend une partie robot généralement désignée en 1 et destinée à être fixée à un poignet d'un robot R, une partie outil généralement désignée en 2 et destinée à être fixée à un outil non représenté, et des moyens d'accouplement généralement désignés en 3.

Les moyens de fixation de la partie robot 1 au poignet du robot R et les moyens de fixation de la partie outil 2 à l'outil peuvent comprendre tout mode de fixation amovible comme le boulonnage, le bridage ou autre.

Les moyens d'accouplement 3 sont destinés à assurer la liaison de la partie robot 1 et de la partie outil 2 de telle manière que celles-ci puissent être sélectivement accouplées et désaccouplées.

Les moyens d'accouplement 3 comprennent un appendice 4 tubulaire prolongeant la partie robot 1. Le volume intérieur de l'appendice 4 est divisé axialement en deux compartiments 5, 6, le compartiment 5 étant adjacent à la partie robot 1.

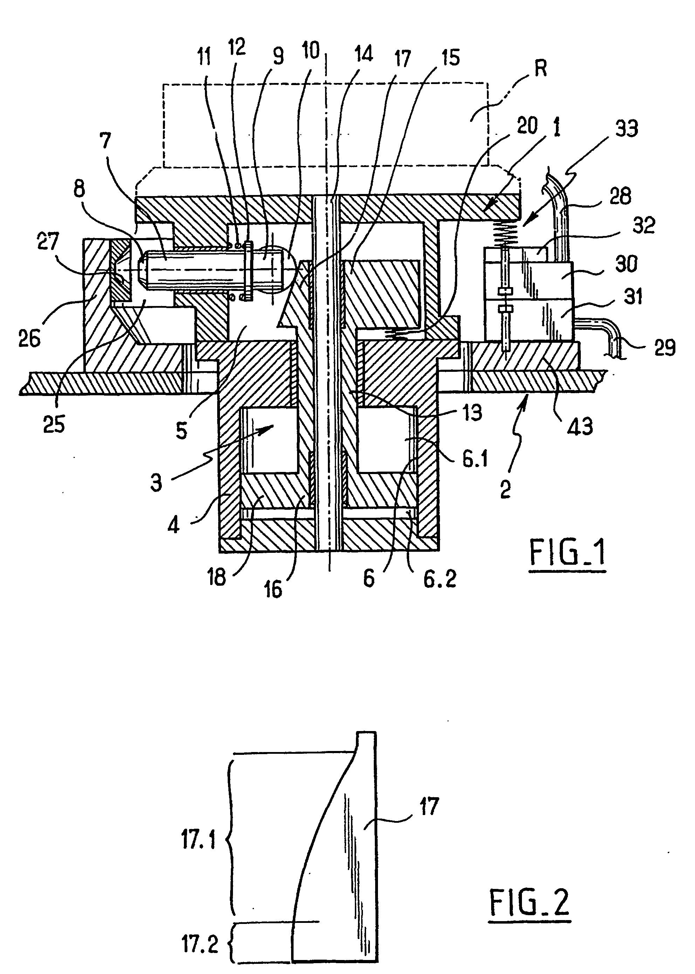

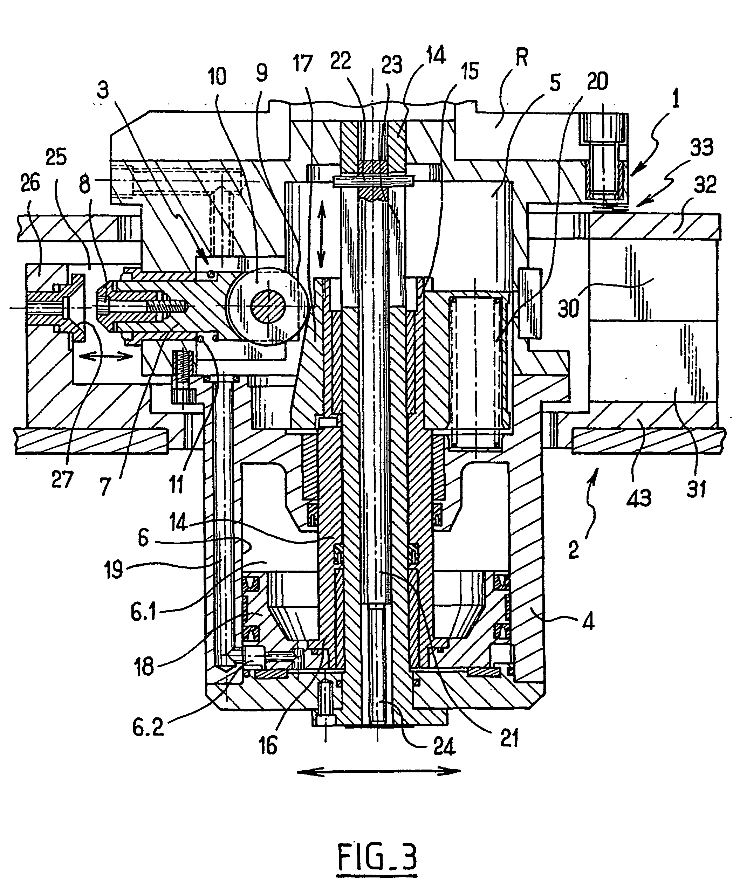

Trois doigts 7 (dont un seul est visible aux figures) sont montés radialement à 120° les uns des autres dans la paroi de l'appendice 4 pour avoir une extrémité 8 à l'extérieur de l'appendice 4 et. une extrémité 9 en saillie à l'intérieur du compartiment 5. L'extrémité 8 est de forme conique et l'extrémité 9 est pourvue d'un galet 10. Les doigts 7 sont montés pour coulisser dans la paroi de l'appendice 4 entre une position sortie dans laquelle l'extrémité 8 s'étend radialement en saillie à l'extérieur de l'appendice 4 et une position rentrée (représentées aux figures 1 et 3) dans laquelle l'extrémité 8 est en retrait par rapport à sa position sortie.

Chaque doigt 7 est rappelé en position rentrée par un ressort 11 intercalé entre la paroi de l'appendice 4 et un épaulement 12 du doigt 7.

Un coulisseau 13 d'actionnement des doigts 7 entre leurs deux positions s'étend axialement dans l'appendice 4. Le coulisseau 13 est de forme tubulaire et est monté sur un arbre 14 de guidage en translation de manière, d'une part, à traverser la cloison séparant les compartiments 5 et 6 pour avoir une extrémité 15 en saillie dans le compartiment 5 et une extrémité 16 en saillie dans le compartiment 6 et, d'autre part, à coulisser entre une position éloignée de la partie robot 1 et une position rapprochée de la partie robot 1.

L'extrémité 15 est pourvue de cames 17 en forme de rampe sur lesquelles les galets 10 sont maintenus appliqués par les ressorts 11 et sont destinés à rouler. Les cames 17 sont agencées de telle manière que, lorsque le coulisseau 13 est dans sa position éloignée, les doigts 7 soient dans leur position rentrée et que, lorsque le coulisseau est dans sa position rapprochée, les doigts 7 soient dans leur position sortie. Les cames 17 ont un tronçon de pente décroissante 17.1 afin d'avoir un effort de sortie des doigts 7 important au moment où il est nécessaire de positionner les parties robot et outil l'une par rapport à l'autre et d'exploiter au mieux la course de la came en fonction de l'effort à fournir, et un tronçon de pente nulle 17.2 pour coopérer avec les doigts 7 lorsque le coulisseau 13 est dans sa position rapprochée et les doigts sont en position sortie. Le tronçon de pente nulle 17.2 s'étend parallèlement à la direction de coulissement du coulisseau pour s'opposer à un effort d'enfoncement des doigts 7 de telle manière qu'un tel effort d'enfoncement ne puisse provoquer le mouvement du coulisseau 13 vers sa position éloignée (ce qui permettrait la rentrée des doigts 7).

L'extrémité 16 est pourvue d'un piston 18 divisant de façon étanche le compartiment 6 en une chambre avant 6.1 et en une chambre arrière 6.2 à volume variable. Des conduits 19 d'admission et d'échappement d'air débouchent dans les chambres avant et arrière 6.1, 6.2.

Un ressort 20 est intercalé entre un épaulement de l'extrémité 15 et la cloison séparant les compartiments 5 et 6 pour rappeler élastiquement le coulisseau 13 dans sa position rapprochée de la partie robot 1. En cas de coupure de l'alimentation en air, le ressort 20 maintient le coulisseau 13 dans sa position rapprochée et les doigts 7 en position sortie. L'accouplement est donc assuré même en cas de coupure de l'alimentation afin d'éviter des désaccouplements accidentels.

L'arbre 14 est creux et reçoit à coulissement une tige 21 ayant une extrémité pourvue d'un taquet 22 s'étendant transversalement de part et d'autre de la tige 21 pour faire saillie dans le compartiment 5 par des lumières longitudinales 23 de l'arbre 14 et à l'opposé une extrémité 24 filetée. La tige 21 est destinée à être utilisée pour exercer une traction sur le coulisseau 13 au moyen du taquet 22 à l'encontre de l'effort exercé par le ressort 22 afin de ramener manuellement le coulisseau 13 dans sa position éloignée et rentrer les doigts en cas de coupure de l'alimentation en air.

La partie outil 2 comprend une pièce comportant une embase en forme de plaque 43 pour sa fixation à l'outil et une paroi cylindrique 26 délimitant un logement 25 ayant un diamètre intérieur supérieur au diamètre extérieur de l'appendice 4 pour accueillir l'appendice 4 avec un jeu transversal. A l'intérieur de paroi 26 sont ménagés radialement des renfoncements 27 coniques pour accueillir les extrémités 8 des doigts 7 en position sortie. La paroi 26 et les renfoncements 27 sont agencés pour qu'il existe un jeu transversal entre les doigts 7 en position rentrée et les renfoncements 27. La coopération des doigts 7 et des renfoncements 27 assure à la fois l'accouplement de la partie robot 1 et de la partie outil 2 et le positionnement relatif de celles-ci.

La partie robot 1 et la partie outil 2 comportent également des circuits de transport d'énergie symbolisés respectivement en 28 et 29 à la figure 1 et des moyens de raccordement de ces circuits l'un à l'autre.

Ces moyens de raccordement comprennent des connecteurs 30, 31 homologues de type classique reliés chacun à un des circuits de transport en énergie 28, 29.

Le connecteur 30 est monté sur une couronne support 32 ayant un diamètre intérieur supérieur à un diamètre extérieur de l'appendice 4 et s'étendant autour de l'appendice 8 avec un jeu transversal par rapport à celui-ci. La couronne support 32 est reliée à la partie robot 1 par des moyens de liaison généralement désignés en 33.

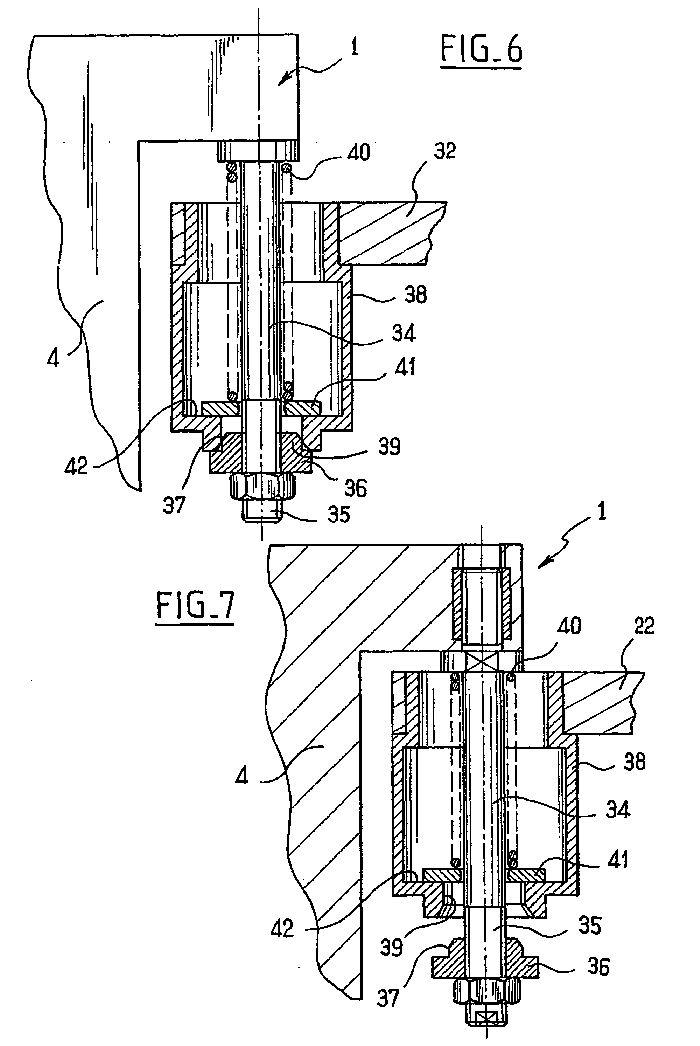

Les moyens de liaison 33, mieux visibles aux figures 6 et 7, comprennent des tiges 34 qui sont fixées à la partie robot 1 et sont parallèles à l'axe de l'appendice 4. Chaque tige 34 possède une extrémité libre filetée 35 sur laquelle est engagé un écrou 36 qui possède du côté de la partie robot 1 une portion 37 comportant une portée de centrage cylindro-tronconique et un épaulement radial de butée axiale.

Chaque tige 34 est engagée dans une douille 38 qui a un diamètre intérieur supérieur au diamètre des tiges 34 et qui est reçue dans un perçage ménagé dans la couronne support 32 de manière à s'étendre d'un côté de la couronne support 32 opposé à la partie robot 1. L'extrémité filetée 35 et l'écrou 36 s'étendent en saillie de l'extrémité de la douille 38 opposée à la partie robot 1. Cette extrémité de la douille 38 définit un siège 39 pour la portion 37 de l'écrou 36. Un ressort 40. s'étend entre un épaulement de la tige 34 adjacent à la partie robot 1 et une rondelle 41 en appui contre un épaulement interne 42 de ladite extrémité de la douille 38. La couronne support 32 est donc mobile par rapport à la partie robot 1 entre une première position (visible à la figure 6) dans laquelle la portion 37 de l'écrou 36 est en appui contre le siège 39 et assure le positionnement relatif précis de la couronne support 32 par rapport à la partie robot 1 et une deuxième position (visible à la figure 7) dans laquelle la portion 37 de l'écrou 36 est décollé du siège 39 et autorise des mouvements relatifs de la partie robot 1 et de la couronne support 32. La première position est dite de solidarisation indexée. La deuxième position est dite de désolidarisation, l'ampleur des mouvements relatifs possibles étant déterminée transversalement par le jeu entre la tige 34 et le siège 39 et entre la couronne support 32 et l'appendice 8, et axialement par la distance entre la portion 37 et la partie robot 1. On notera qu'un contre-écrou est monté sur le tronçon fileté 35 pour bloquer l'écrou 36. Des moyens de réglage de la position de la portion de centrage et de butée axiale le long de la tige 34 autres qu'un système vis / écrou peuvent être utilisés.

Le connecteur 31 est lui fixé sur la plaque 43 rigidement fixée à l'outil.

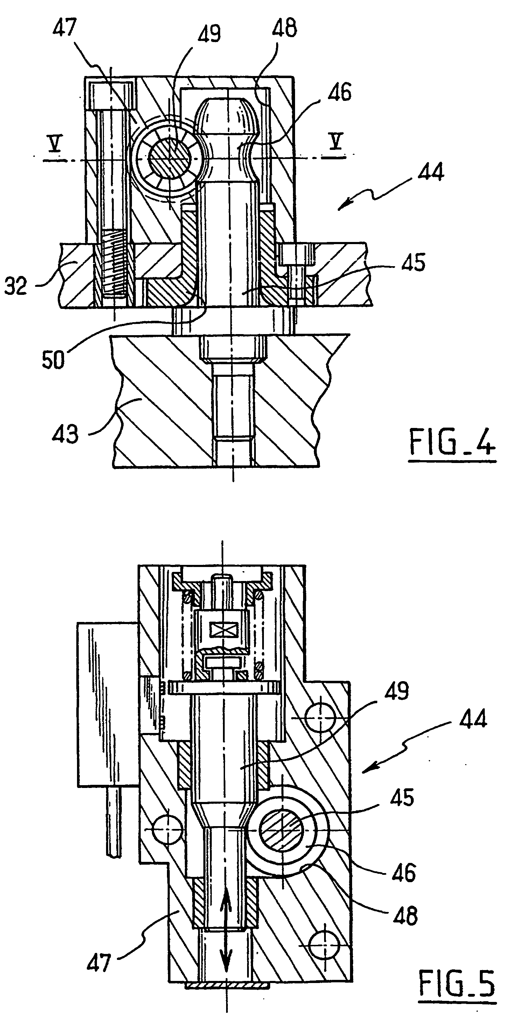

Le changeur d'outil comprend des moyens généralement désignés en 44 de verrouillage des connecteurs 30, 31 en-position connectée (visibles aux figures 4, 5).

Les moyens de verrouillage 44 comprennent des pions 45 fixés sur la plaque 43 pour s'étendre parallèlement à l'appendice 4 et pourvus d'une gorge 46, et un organe de verrouillage 47 solidaires de la couronne support 32.

Chaque organe de verrouillage 47 comprend un logement 48 pour accueillir le pion 45 et un élément de retenue axiale 49 monté transversalement dans le logement pour être mobile entre une position en saillie dans le logement 48 pour être introduit latéralement dans la gorge 46 du pion 45 et former une butée à son extraction du logement 48 et une position escamotée dans laquelle l'élément de retenue axiale 49 est dégagé de la gorge 46. L'organe de verrouillage 47 comprend également un moyen non représenté d'actionnement de l'élément de retenue axiale 49 entre ses deux positions. Cet élément d'actionnement peut être par exemple un vérin pneumatique.

On notera que les pions 45 sont perçus de manière ajustée dans les logements 48. Les pions 45 ont en outre une extrémité libre tronconique et les logements 48 ont une section d'entrée 50 également de forme tronconique de manière à assurer un centrage de la couronne support 32 par rapport à la plaque 43. Les pions 45 coopérant avec les logements 48 constituent par conséquent des moyens de positionnement de la couronne support 32 par rapport à la partie outil 2.

Le fonctionnement du changeur va maintenant être décrit en liaison avec un outil de maintien d'une pièce.

L'outil équipé de la partie outil 2 est préalablement posé dans un support dont la position est référencée de telle manière que le robot peut aller chercher cet outil. Le robot est programmé pour amener la partie robot 1 sensiblement en correspondance de la partie outil 2, c'est-à-dire aligner les axes de l'appendice 4 et du logement 25, aligner les doigts 7 avec les renfoncements 27 et mettre en regard le connecteur 30 avec le connecteur 31. Le robot approche ensuite la partie robot 1 de la partie outil 2 parallèlement aux axes de l'appendice 4 et du logement 25 et engage l'appendice 4 dans le logement 25. Le connecteur 30 rencontre alors le connecteur 31 et s'engage sur celui-ci de telle manière que le mouvement d'approche se poursuivant, la couronne support 32 est déplacée vers la partie robot 1 tandis que la partie robot 1 se rapproche de la partie outil 2. La portion de centrage et de butée axiale 37 est alors décollée du siège 39, ce qui autorise un mouvement relatif de l'appendice 8 et de la couronne support 32. Simultanément, lors de l'approche des parties outil 2 et robot 1, les pions 45 s'engagent dans les sections d'entrée 50 des logements 48 et positionnent précisément la couronne support 32 et la partie outil 2. Lorsque les connecteurs 30 et 31 sont en position connectée, l'élément de retenue axiale 39 est amené de sa position escamotée à sa position en saillie et verrouille la connexion. La réalisation de la connexion est par exemple vérifiée par un capteur d'enfoncement des pions 45 dans les logements 48.

Lorsque la partie robot 1 est sensiblement dans sa position d'accouplement avec la partie outil 2, de l'air est admis dans la chambre arrière 6.2 pour amener le coulisseau 13 de sa position éloignée à sa position rapprochée. Les cames 17 provoquent alors la sortie des doigts 7 dont l'extrémité. 8 s'engage dans les renfoncements 27. La coopération de l'extrémité 8 et des renfoncements 27 repositionne l'appendice 8 par rapport au logement 25 et immobilise l'appendice 8 dans celui-ci.

Le robot dégage ensuite l'outil de son support et emmène l'outil dans une zone de préhension de pièces. La pièce est saisie de manière classique par l'outil et est amenée par le robot sur la ligne d'assemblage où l'outil est verrouillé (ou bridé) avec un bâti et/ou avec un outil de maintien d'une autre pièce.

Une fois l'outil interverrouillé, sur le bâti ou l'autre outil, le désaccouplement de la partie robot 1 et de la partie outil 2 est commandée. De l'air est alors injecté dans la chambre avant 6.1 et évacué de la chambre arrière 6.2 pour amener le coulisseau 13 dans sa position éloignée. Les doigts 7 sont alors rappelés dans leur position rentrée par les ressorts 11. Ainsi, tandis que la connexion est maintenue par les moyens de verrouillage 44, la partie robot 1 et la partie outil 2 sont désolidarisées. Ceci permet d'éliminer les contraintes engendrées par le double positionnement réalisé d'une part par le robot et d'autre part par le verrouillage sur le bâti ou l'autre outil.

L'assemblage des pièces est ensuite réalisé.

Une fois celui-ci terminé, l'outil est commandé pour lâcher la pièce et le coulisseau 13 est ramené dans sa position rapprochée pour repositionner l'appendice 8 par rapport au logement 25 et assurer l'accouplement de la partie robot 1 et de la partie outil 2.

L'outil est ensuite déverrouillé du bâti et/ou de l'autre outil de maintien et le robot ramène l'outil vers la zone de préhension de pièces.

Pour désaccoupler l'outil et le poignet du robot R, le robot ramène l'outil dans son support. Les éléments de retenue axiale 49 sont alors ramenés dans leur position escamotée afin de libérer les pions 45. Simultanément, le coulisseau 13 est ramené dans sa position éloignée pour permettre la rentrée des doigts 7 et réaliser le désaccouplement de la partie outil 2 et de la partie robot 1. Le robot écarte ensuite parallèlement à la direction d'accostage la partie robot 1 de la partie outil 2. La portion de centrage et de butée axiale 37 de chaque écrou 36 est alors ramenée contre le siège 39 et exerce une traction sur la couronne support 32 repositionnant celle-ci par rapport à la partie robot 1 et déconnectant les connecteurs 30 et 31. La partie robot 1 est ensuite complètement dégagée.

Bien entendu, l'invention n'est pas limitée au mode de réalisation décrit et on peut y apporter des variantes de réalisation sans sortir du cadre de l'invention tel que défini par les revendications.

En particulier, d'autres moyens d'accouplement peuvent être utilisés, comme des brides en crochet.

En outre, d'autres moyens de verrouillage peuvent être utilisés et notamment là aussi des brides en crochet.

De plus, des moyens de positionnement relatifs de la couronne support et de la partie outil 2 peuvent être prévus indépendamment des pions 45 qui ne seraient alors plus utilisés que pour le verrouillage de la connexion.

D'une manière générale, il est possible de réaliser un changeur à partir d'inversions cinématiques réalisées sur le mode de réalisation décrit.

## Revendications

1. Changeur d'outil comportant une partie robot (1) et une partie outil (2) pourvues de moyens de fixation respectivement à un poignet de robot et à un outil, des moyens d'accouplement et de désaccouplement (3) de la partie outil et de la partie robot, et des moyens de raccordement (30, 31) d'un circuit commande de la partie outil (29) à un circuit de commande de la partie robot (28), ces moyens de raccordement comportant au moins des premier et deuxième connecteurs (30, 31) homologues chacun monté sur une des parties du changeur et relié au circuit de transport d'énergie de ladite partie, **caractérisé en ce qu'**au moins le premier connecteur est solidaire d'un support (32) relié à la partie correspondante du changeur par des moyens de liaison (33) ayant un état de solidarisation indexée du support par rapport à ladite partie correspondante et un état de désolidarisation du support par rapport à ladite partie correspondante.

2. Changeur d'outil selon la revendication 1, **caractérisé en ce qu'**il comporte un moyen d'amenée (30) des moyens de liaison dans leur état de désolidarisation, le moyen d'amenée étant agencé pour coopérer avec l'autre partie (2) du changeur lorsque les parties (1, 2) du changeur sont rapprochées l'une de l'autre.

3. Changeur d'outil selon la revendication 2, **caractérisé en ce que** les moyens de liaison comprennent au moins deux éléments homologues de positionnement (37, 39) solidaires pour l'un de ladite partie correspondante (1) et pour l'autre du support (32), et **en ce que** le support (32) est monté sur ladite partie correspondante (4) pour être mobile au moins parallèlement à une direction d'accouplement des deux parties (1, 2) du changeur entre une première position dans laquelle les éléments homologues de positionnement sont mutuellement engagés pour assurer la solidarisation indexée et une deuxième position dans laquelle les éléments homologues de positionnement sont dégagés l'un de l'autre.

4. Changeur d'outil selon la revendication 3, **caractérisé en ce qu'**il comporte un moyen (40) pour rappeler élastiquement le support (32) dans sa première position.

5. Changeur d'outil selon la revendication 3 ou la revendication 4, **caractérisé en ce que** l'un des éléments de positionnement est une tige (34) qui est parallèle à la direction d'accouplement et comporte une portion de centrage et de butée axiale (37) et l'autre élément de positionnement est un logement (38) recevant la tige avec un jeu transversal et comportant un siège (39) pour coopérer avec la portion de centrage et de butée axiale (37).

6. Changeur d'outil selon la revendication 5, **caractérisé en ce que** l'épaulement de centrage et de butée axiale (37) est agencé pour être réglable en position le long de la tige (34).

7. Changeur d'outil selon la revendication 6, **caractérisé en ce que** la tige (34) comporte un tronçon fileté (35) et la portion de centrage et de butée axiale (37) est formée par un écrou (36) engagé sur le tronçon fileté.

8. Changeur d'outil selon l'une quelconque des revendications précédentes, **caractérisé en ce qu'**il comprend des moyens (45, 48) de positionnement relatif du support (32) par rapport à l'autre partie (2) du changeur.

9. Changeur d'outil selon l'une quelconque des revendications précédentes, **caractérisé en ce qu'**il comprend des moyens de verrouillage (44) des connecteurs (30, 31) en position connectée qui sont agencés pour être actifs au moins lorsque les moyens de liaison (33) sont dans leur état de désolidarisation.

10. Changeur d'outil selon la revendication 9, **caractérisé en ce que** chaque connecteur (30, 31) est solidaire d'une plaque (32, 43) montée sur la partie correspondante (1, 2) et les moyens de verrouillage comprennent un pion (45) fixé sur une des plaques pour s'étendre parallèlement à la direction d'accouplement et pourvu latéralement d'un relief (46), un logement (48) ménagé dans l'autre des plaques pour recevoir le pion, un élément de retenue axiale (49) monté dans le logement pour être mobile entre une position en saillie dans le logement pour coopérer avec le relief du pion et former une butée à son extraction du logement et une position escamotée pour être dégagé du logement, et un moyen d'actionnement de l'élément de retenue axiale entre ses deux positions.

11. Changeur d'outil selon la revendication 10, **caractérisé en ce que** le pion (45) assure un positionnement relatif des plaques (32, 43).

12. Changeur d'outil selon l'une quelconque des revendications précédentes, **caractérisé en ce que** les moyens d'accouplement et de désaccouplement comprennent un appendice (4) solidaire d'une des parties (1) du changeur et pourvu d'au moins trois doigts (7) radiaux qui ont une extrémité libre conique (8) et qui sont montés pour coulisser entre une position de sortie dans laquelle ils s'étendent radialement en saillie de l'appendice et une position rentrée dans laquelle ils s'étendent en retrait de leur position sortie, un organe d'actionnement (13) des doigts entre leurs deux positions, et un logement (25) ménagé dans l'autre partie (2) du changeur pour recevoir l'appendice avec un jeu transversal, le logement étant délimité par une paroi (26) dans laquelle sont ménagés radialement des renfoncements (27) pour accueillir les extrémités libres des doigts dans leur position sortie, le logement étant agencé de telle manière qu'il existe un jeu transversal entre l'appendice (4) avec les doigts (7) en position rentrée et le logement et entre l'extrémité libre conique des doigts en position rentrée et les renfoncements.

13. Changeur d'outil selon la revendication 12, **caractérisé en ce que** l'organe d'actionnement comprend un coulisseau (13) monté dans l'appendice (4) pour coulisser perpendiculairement aux doigts (7) entre une position de rentrée des doigts et une position de sortie des doigts et pourvu d'une surface de came (17) pour amener les doigts de leur position rentrée vers leur position sortie, les doigts étant rappelés élastiquement vers leur position rentrée.

14. Changeur d'outil selon la revendication 13, **caractérisé en ce que** la surface de came (17) comporte une rampe de pente décroissante.

15. Changeur d'outil selon la revendication 13 ou la revendication 14, **caractérisé en ce que** la surface de came (17) comporte un tronçon de pente nulle parallèle à la direction de coulissement du coulisseau (13) pour coopérer avec les doigts (7) en position sortie.

## Patentansprüche

1. Werkzeugwechselvorrichtung, umfassend einen Roboterteil (1) und einen Werkzeugteil (2), die mit Mitteln zur Befestigung an einem Roboterhandgelenk bzw. an einem Werkzeug versehen sind, Mittel (3) zum Koppeln und Entkoppeln des Werkzeugteils und des Roboterteils, und Mittel (30, 31) zum Verbinden eines Steuerkreises (29) des Werkzeugteils mit einem Steuerkreis (28) des Roboterteils, wobei diese Verbindungsmittel mindestens erste und zweite homologe Verbindungsstücke (30, 31) umfassen, die jeweils an einem der Teile der Wechselvorrichtung montiert und mit dem Energietransportkreis des genannten Teils verbunden sind, **dadurch gekennzeichnet, dass** mindestens das erste Verbindungsstück fest mit einem Träger (32) verbunden ist, der mit dem entsprechenden Teil der Wechselvorrichtung über Verbindungsmittel (33) verbunden ist, die einen Zustand indexierter Verbindung des Trägers in Bezug auf den genannten entsprechenden Teil und einen Zustand der Trennung des Trägers in Bezug auf den genannten entsprechenden Teil haben.

2. Werkzeugwechselvorrichtung nach Anspruch 1, **dadurch gekennzeichnet, dass** sie Mittel (30) zum Mitnehmen der Verbindungsmittel in deren Zustand der Trennung hat, wobei die Mitnahmemittel derart angeordnet sind, dass sie mit dem anderen Teil (2) der Wechselvorrichtung zusammenwirken, wenn die Teile (1, 2) der Wechselvorrichtung aneinander herangerückt sind.

3. Werkzeugwechselvorrichtung nach Anspruch 2, **dadurch gekennzeichnet, dass** die Verbindungsmittel mindestens zwei homologe Positionierungselemente (37, 39) umfassen, von denen eines fest mit dem genannten entsprechenden Teil (1) und das andere mit dem Träger (32) verbunden ist, und dass der Träger (32) an dem genannten entsprechenden Teil (4) montiert ist, um zumindest parallel zu einer Kopplungsrichtung der beiden Teile (1, 2) der Wechselvorrichtung zwischen einer ersten Position, in der die homologen Positionierungselemente gegenseitig in Eingriff stehen, um die indexierte Verbindung zu gewährleisten, und einer zweiten Position beweglich zu sein, in der die homologen Positionierungselemente zueinander außer Eingriff stehen.

4. Werkzeugwechselvorrichtung nach Anspruch 3, **dadurch gekennzeichnet, dass** sie Mittel (40) umfasst, um den Träger (32) elastisch in seine erste Position zurückzustellen.

5. Werkzeugwechselvorrichtung nach Anspruch 3 oder Anspruch 4, **dadurch gekennzeichnet, dass** eines der Positionierungselemente eine Stange (34) ist, die sich parallel zur Kopplungsrichtung erstreckt und einen Zentrierungs- und Axialanschlagsabschnitt (37) umfasst, und das andere Positionierungselement eine Aufnahme (38) ist, die die Stange mit einem transversalen Spiel aufnimmt und einen Sitz (39) umfasst, um mit dem Zentrierungs- und Axialanschlagsabschnitt (37) zusammenzuwirken.

6. Werkzeugwechselvorrichtung nach Anspruch 5, **dadurch gekennzeichnet, dass** die Zentrierungs- und Axialanschlagsschulter (37) derart angeordnet ist, dass sie entlang der Stange (34) in ihrer Position verstellbar ist.

7. Werkzeugwechselvorrichtung nach Anspruch 6, **dadurch gekennzeichnet, dass** die Stange (34) einen mit einem Gewinde versehenen Abschnitt (35) umfasst und der Zentrierungs- und Axialanschlagsabschnitt (37) aus einer Mutter (36) gebildet ist, die mit dem mit einem Gewinde versehenen Abschnitt in Eingriff steht.

8. Werkzeugwechselvorrichtung nach einem der vorhergehenden Ansprüche, **dadurch gekennzeichnet, dass** sie Mittel (45, 48) zur Relativpositionierung des Trägers (32) in Bezug auf den anderen Teil (2) der Wechselvorrichtung hat.

9. Werkzeugwechselvorrichtung nach einem der vorhergehenden Ansprüche, **dadurch gekennzeichnet, dass** sie Verriegelungsmittel (44) zum Verriegeln der Verbindungsstücke (30, 31) in ihrer verbundenen Position umfasst, wobei diese Mittel derart angeordnet sind, dass sie zumindest dann aktiv sind, wenn die Verbindungsmittel (33) in ihrem Zustand der Trennung sind.

10. Werkzeugwechselvorrichtung nach Anspruch 9, **dadurch gekennzeichnet, dass** jedes Verbindungsstück (30, 31) fest mit einer Platte (32, 43) verbunden ist, die an dem entsprechenden Teil (1, 2) gelagert ist, und die Verriegelungsmittel einen Zapfen (45) umfassen, der an einer der Platten befestigt ist, um sich parallel zur Kopplungsrichtung zu erstrecken, und der seitlich mit einem Relief (46) versehen ist, eine Aufnahme (48), die in der anderen der Platten ausgebildet ist, um den Zapfen aufzunehmen, ein Axialrückhalteelement (49), das in der Aufnahme so gelagert ist, dass es zwischen einer vorstehenden Position in der Aufnahme zum Zusammenwirken mit dem Relief des Zapfens und zum Bilden eines Anschlages gegen dessen Herausziehen aus der Aufnahme, und einer zurückgezogenen Position verstellbar ist, in der es aus der Aufnahme ausgerückt ist, sowie Betätigungsmittel zum Verstellen des Axialrückhalteelements zwischen seinen beiden Positionen.

11. Werkzeugwechselvorrichtung nach Anspruch 10, **dadurch gekennzeichnet, dass** der Zapfen (45) eine Relativpositionierung der Platten (32, 43) sicherstellt.

12. Werkzeugwechselvorrichtung nach einem der vorhergehenden Ansprüche, **dadurch gekennzeichnet, dass** die Kopplungs- und Entkopplungsmittel ein Ansatzstück (4) umfassen, das fest mit einem der Teile (1) der Wechselvorrichtung verbunden und mit mindestens drei radialen Fingern (7) versehen ist, die ein freies konisches Ende (8) haben und verschiebbar zwischen einer ausgefahrenen Stellung, in der sie radial von dem Ansatzstück abstehen, und einer eingefahrenen Stellung gelagert sind, in der sie gegenüber ihrer ausgefahrenen Stellung zurückversetzt sind, ein Betätigungsorgan (13) zum Verstellen der Finger zwischen ihren beiden Stellungen, und eine Aufnahme (25), die in dem anderen Teil (2) der Wechselvorrichtung ausgebildet ist, um das Ansatzstück mit einem transversalen Spiel aufzunehmen, wobei die Aufnahme von einer Wand (26) begrenzt ist, in der radiale Vertiefungen (27) ausgebildet sind, um die freien Enden der Finger in ihrer ausgefahrenen Stellung aufzunehmen, wobei die Aufnahme derart ausgebildet ist, dass ein transversales Spiel zwischen dem Ansatzstück (4) mit den Fingern (7) in eingefahrener Stellung und der Aufnahme und zwischen dem freien konischen Ende der Finger in eingefahrener Stellung und den Vertiefungen vorhanden ist.

13. Werkzeugwechselvorrichtung nach Anspruch 12, **dadurch gekennzeichnet, dass** das Betätigungselement einen Gleitstößel (13) umfasst, der in dem Ansatzstück (4) gelagert ist, um sich senkrecht zu den Fingern (7) zwischen einer eingefahrenen Stellung der Finger und einer ausgefahrenen Stellung der Finger zu verschieben, und mit einer Nockenfläche (17) versehen ist, um die Finger aus ihrer eingefahrenen Stellung in ihre ausgefahrene Stellung mitzunehmen, wobei die Finger elastisch in ihre eingefahrene Stellung zurückgestellt sind.

14. Werkzeugwechselvorrichtung nach Anspruch 13, **dadurch gekennzeichnet, dass** die Nockenfläche (17) eine Rampe mit abnehmender Steigung umfasst.

15. Werkzeugwechselvorrichtung nach Anspruch 13 oder Anspruch 14, **dadurch gekennzeichnet, dass** die Nockenfläche (17) einen Nullsteigungsabschnitt hat, der parallel zur Verschiebungsrichtung des Gleitstößels (13) ist, um mit den Fingern (7) in ihrer ausgefahrenen Stellung zusammenzuwirken.

## Claims

1. A tool changer comprising a robot portion (1) and a tool portion (2) provided with fastener means respectively for fastening to a robot wrist and to a tool, means (3) for coupling and decoupling the tool portion and the robot portion, and connection means (30, 31) for connecting a control circuit (29) of the tool portion to a control circuit (28) of the robot portion, these connection means comprising at least first and second complementary connectors (30, 31) each mounted on one of the portions of the changer and connected to the power supply circuit of said portion, the changer being **characterized in that** at least the first connector is secured to a support (32) connected to the corresponding portion of the changer by link means (33) having a state in which the support is secured in indexed manner relative to said corresponding portion, and a state in which the support is separate from said corresponding portion.

2. A tool changer according to claim 1, **characterized in that** it includes drive means (30) for bringing the link means into their separation state, the drive means being arranged to co-operate with the other portion of the changer when the portions (1, 2) of the changer are brought towards each other.

3. A tool changer according to claim 2, **characterized in that** the link means comprise at least two complementary positioning elements (37, 39) one secured to said corresponding portion (1) and the other to the support (32), and **in that** the support (32) is mounted on said corresponding portion (4) to be movable at least parallel to a coupling direction of the two portions of the changer between a first position in which the complementary positioning elements are mutually engaged to secure the portion in indexed manner, and a second position in which the complementary positioning elements are separate from each other.

4. A tool changer according to claim 3, **characterized in that** it includes means (40) for resiliently urging the support (32) towards its first position.

5. A tool changer according to claim 3 or claim 4, **characterized in that** one of the positioning elements is a rod (34) which is parallel to the coupling direction, and has a centering and axial abutment portion (37), and the other positioning element is a housing (38) receiving a rod with transverse clearance and having a seat (39) for co-operating with the centering and axial abutment portion (37).

6. A tool changer according to claim 5, **characterized in that** the centering and axial abutment shoulder (37) is arranged to be adjustable in position along the rod (34).

7. A tool changer according to claim 6, **characterized in that** the rod (34) has a threaded segment (35) and the centering and axial abutment portion (37) is formed by a nut (36) engaged on the threaded portion.

8. A tool changer according to any preceding claim, **characterized in that** it includes means (45, 48) for positioning the support (32) relative to the other portion (2) of the changer.

9. A tool changer according to any preceding claim, **characterized in that** it includes locking means (44) for locking the connectors (30, 31) in the connected position, which locking means are arranged to be active, at least when the link means (33) are in their separate state.

10. A tool changer according to claim 9, **characterized in that** each connector (30, 31) is secured to a plate (32, 43) mounted on the corresponding portion (1, 2), and the locking means comprise a pin (45) fixed on one of the plates to extend parallel to the coupling direction and provided with a lateral portion in relief (46), a housing (48) formed in the other one of the plates to receive the pin, an axial retaining element (49) mounted in the housing to be movable between a position projecting into the housing in order to co-operate with the portion in relief of the pin and form an abutment against it being extracted from the housing, and a retracted position for being disengaged from the housing, and means for actuating the axial retaining element between its two positions.

11. A tool changer according to claim 10, **characterized in that** the pin (45) provides relative positioning between the plates (32, 43).

12. A tool changer according to any preceding claim, **characterized in that** the coupling and decoupling means include an appendix (4) secured to one of the portions (1) of the tool changer and provided with at least three radial fingers (7) each having a conical free end (8) and each mounted to slide between an extended position in which it projects radially from the appendix, and a retracted position in which it is retracted from its extended position, an actuator member (13) for actuating the fingers between their two positions, and a housing (25) formed in the other portion (2) of the tool changer in order to receive the appendix with transverse clearance, the housing being defined by a wall in which setbacks (27) are formed radially in order to receive the free ends of the fingers in their extended positions, the housing being arranged in such a manner as to ensure that transverse clearance exists between the housing and the appendix (4) with its fingers (7) in the retracted position, and between the setbacks and the conical free ends of the fingers in the retracted position.

13. A tool changer according to claim 12, **characterized in that** the actuator member comprises a slide (13) mounted in the appendix (4) to slide perpendicularly to the fingers (7) between a finger-retracted position and a finger-extended position, and provided with a camming surface (17) to bring the fingers from their retracted position to their extended position, the fingers being urged resiliently towards their retracted position.

14. A tool changer according to claim 13, **characterized in that** the camming surface (17) has a ramp of decreasing slope.

15. A tool changer according to claim 13 or claim 14, **characterized in that** the camming surface (17) has a segment of zero slope parallel to the sliding direction of the slide (13) in order to co-operate with the fingers (7) in the extended position.
